Europäisches Patentamt

(19) European Patent Office

Office européen des brevets

(11) Numéro de publication: **0 084 477**
**B1**

(12) **FASCICULE DE BREVET EUROPEEN**

(45) Date de publication du fascicule du brevet:
11.09.85

(21) Numéro de dépôt: **83400046.5**

(22) Date de dépôt: **10.01.83**

(51) Int. Cl.⁴: **E 04 F 10/06, B 60 P 3/34**

(54) Store pour caravane ou camping-car.

---

(30) Priorité: **11.01.82 FR 8200549**

(43) Date de publication de la demande:
**27.07.83 Bulletin 83/30**

(45) Mention de la délivrance du brevet:
**11.09.85 Bulletin 85/37**

(84) Etats contractants désignés:
**BE DE GB IT NL**

(56) Documents cités:
**BE - A - 758 776**
**DE - A - 2 551 829**
**FR - A - 1 516 862**
**FR - A - 2 187 572**
**FR - A - 2 454 776**
**US - A - 4 186 758**

(73) Titulaire: **Simon, Jean-Pierre, 31, rue des Ebisoires,**
**F-78370 Plaisir (FR)**

(72) Inventeur: **Simon, Jean-Pierre, 31, rue des Ebisoires,**
**F-78370 Plaisir (FR)**

(74) Mandataire: **Boivin, Claude, 9, rue Edouard-Charton,**
**F-78000 Versailles (FR)**

---

BUNDESDRUCKEREI BERLIN

## Description

On peut augmenter le volume utile d'une caravane ou d'un camping-car en lui adjoignant un store latéral. Mais les stores jusqu'à présent réalisés présentent l'inconvénient de nécessiter le perçage de la paroi de la caravane ou du camping-car et celui de faire saillie latéralement de manière importante, ce qui est contraire aux règlements des Mines (voir par exemple FR-A-2 454 776).

La présente invention a pour objet un store pour caravane ou camping-car qui ne présente pas cet inconvénient.

Le store selon l'invention est défini par la revendication 1.

Lorsque le store n'est pas utilisé, les barres sont rabattues sur la paroi de la caravane ou du camping-car et ne font pratiquement pas saillie. Il en est de même du caisson de store grâce à la forme en S du moyen de support.

Pour employer le store, on fait pivoter les barres pour les amener dans une position sensiblement perpendiculaire à la paroi de la caravane. Il ne reste plus qu'à dérouler le store et à accrocher la barre de charge aux extrémités des bras.

Le moyen de support peut s'étendre sur toute la longueur de la caravane ou du camping-car. Mais il est de préférence constitué de deux pattes indépendantes qu'on fixe au voisinage des parois avant et arrière de la caravane ou de camping-car.

La fixation du moyen de support sur la gouttière se fait sans percement de la carrosserie. Le moyen de support peut, par exemple, être assujette à des pièces de fixation qui comportent un bourrelet en saillie propre à être enfilé dans la gouttière de la caravane ou du camping-car et peuvent être immobilisés en position par des vis prenant appui sur la paroi extérieure de cette gouttière.

De préférence, l'extrémité libre de chacun des bras est en forme de crochet, on porte un embout en forme de crochet, afin de permettre une fixation aisée de la barre de charge.

On a décrit ci-après, à titre d'exemple non limitatif, un mode de réalisation du store selon l'invention, avec référence aux dessins annexés dans lesquels:

La Figure 1 est une vue latérale d'une caravane munie du store,

la Figure 2 en est une vue arrière,

la Figure 3 en est une vue en plan,

la Figure 4 représente à plus grande échelle un détail de la Figure 1,

la Figure 5 représente à plus grande échelle un détail de la Figure 2,

la Figure 6 montre en élévation un embout de bras,

la Figure 7 montre en coupe un embout de la barre de charge,

la Figure 8 est une vue semblable à la Figure 5, dans laquelle le store est monté sur un camping-car.

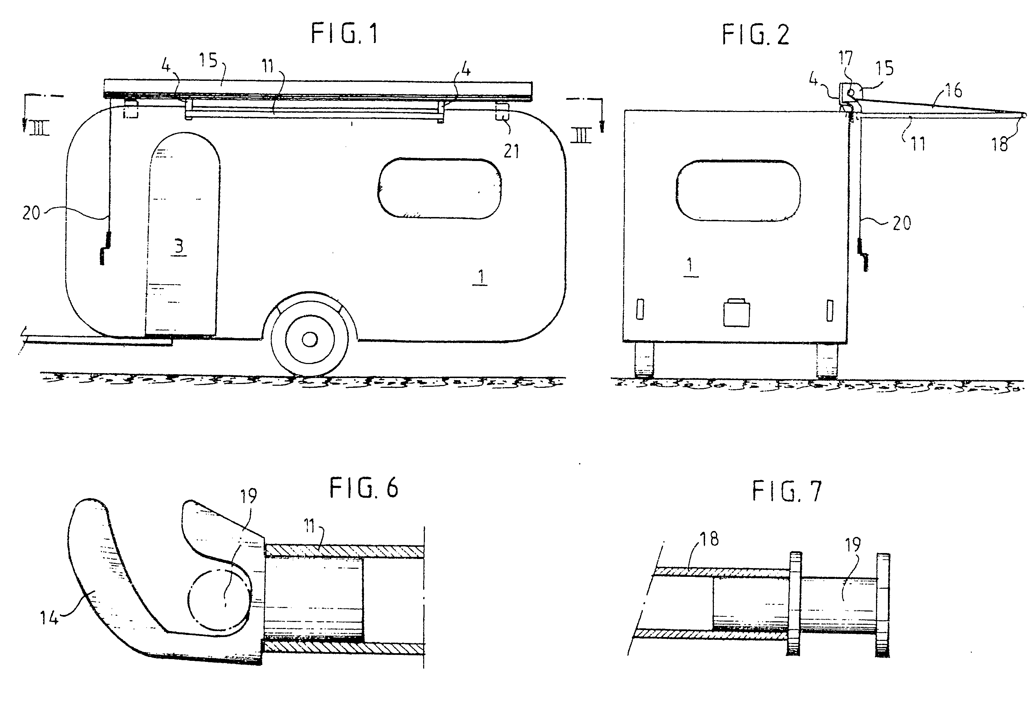

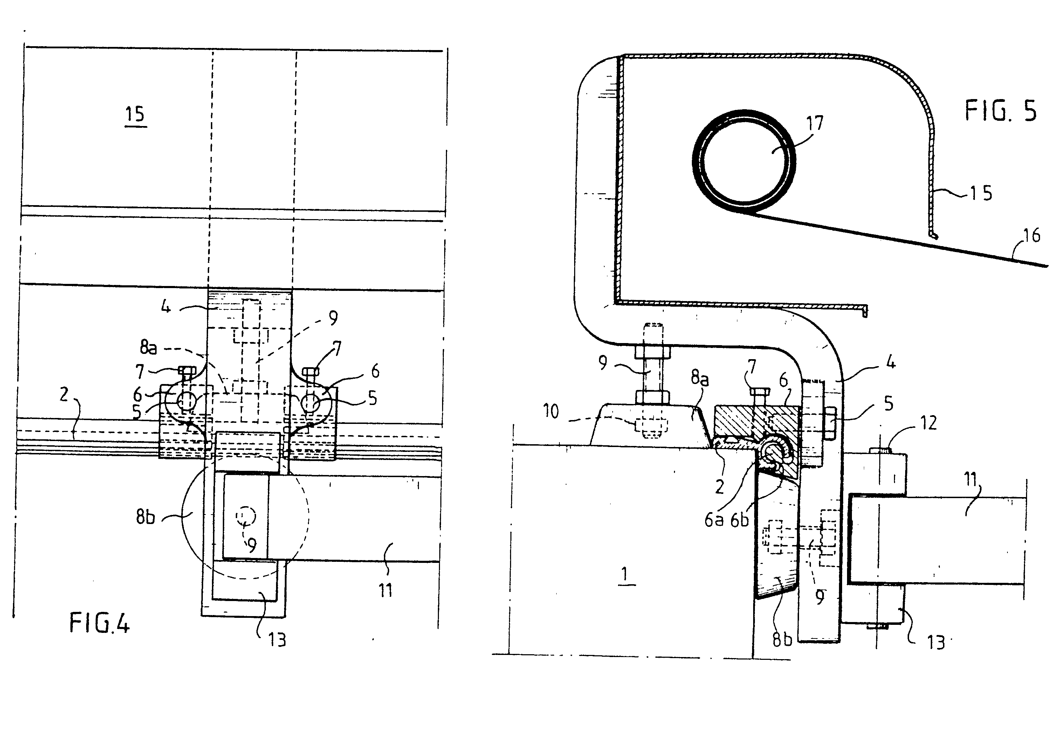

Aux Figures 1 à 7 on voit en 1 une caravane. De la manière usuelle une gouttière 2 en matière élastique est fixée sur le bord horizontal supérieur et sur les bords verticaux du côté de la caravane où se trouve la porte 3.

A proximité de chacune des extrémités du bord horizontal de la gouttière 2, une patte de support 4 pliée en S est fixée par des vis 5 sur deux pièces de fixation 6. Chacune de ces pièces comporte un appendice cylindrique 6a qui est engagé à l'intérieur de la gouttière 2 et est relié au corps de la pièce par un rétrécissement 6b, et est bloquée en position par une vis 7. Deux ventouses 8a et 8b sont interposées entre la caravane 1 et respectivement la branche horizontale de la patte 4 et sa branche verticale inférieure. Chacune de ces ventouses est fixée à la patte par une vis 9 dont une extrémité est vissée dans un écrou 10 noyé dans la ventouse et dont l'autre extrémité est vissée dans la patte ou comporte une tête en appui sur cette patte.

Un bras 11 est articulé autour d'un axe vertical 12, sur un palier 13 fixé à la patte de support 4. Le bras porte à son extrémité libre un embout 14 en forme de crochet. Par ailleurs, un caisson 15 est fixé sur les deux pattes 4, à la partie supérieure de celles-ci. Ce caisson contient un store 16 qui est enroulé sur un tambour 17 et dont le bord libre est fixé à une barre de charge 18. Un embout 19 est emmanché dans chacune des extrémités de cette barre de charge.

Une manivelle 20 est reliée par une rotule à un pignon conique en prise avec un pignon solidaire du tambour 17 et permet ainsi d'enrouler le store 16.

Sur route, le store 16 est enroulé dans le caisson 15 et les deux bras 11 sont repliés le long de la caravane.

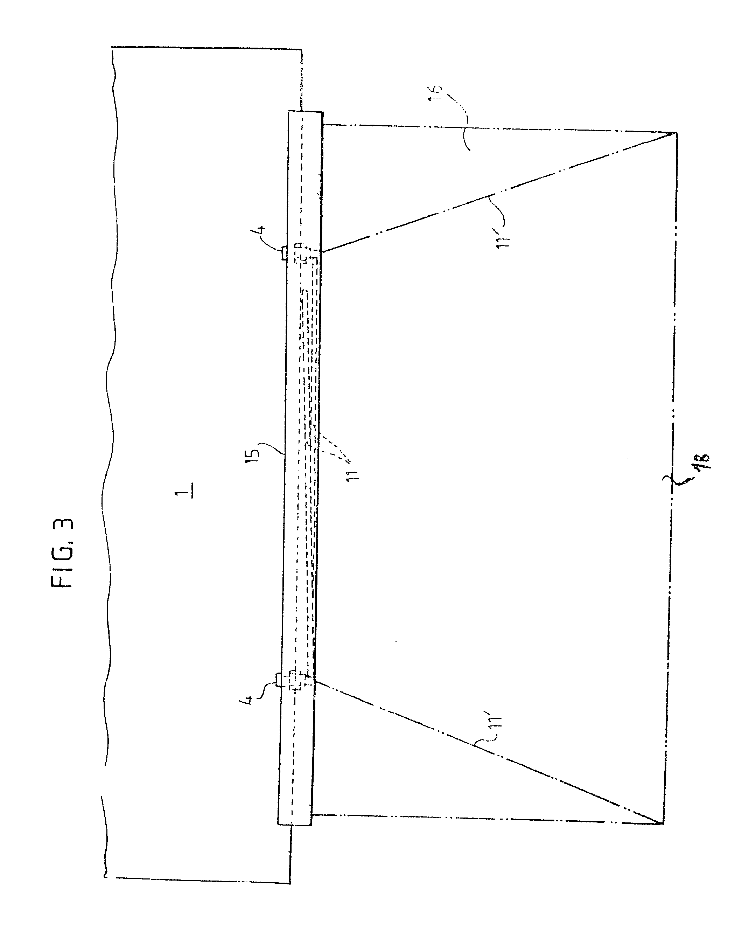

A l'arrêt, quand on désire utiliser le store, il suffit de déplier les bras 11 et de les amener dans la position schématisée en 11' à la Figure 3. Il ne reste plus qu'à tirer sur le store et à engager les embouts 19 de la barre 18 dans les embouts 14. Dans l'exemple représenté les bras en 11' sont légèrement obliques par rapport à une perpendiculaire à la paroi latérale de la caravane; mais ils pourraient être pratiquement perpendiculaires à cette paroi, soit que les pattes de support 4 soient davantage écartées, soit que les extrémités des bras 11 supportent la barre de charge 18 à une certaine distance des extrémités de celle-ci.

Si on le désire on peut améliorer la fixation du store, lors de son utilisation en reliant au sol par des tirants souples les extrémités des bras ou de la barre de charge.

On peut également compléter le store par des stores latéraux, qu'on accroche à des pièces de fixation auxiliaires 21 analogues aux pièces 6 et aux extrémités de la barre 18.

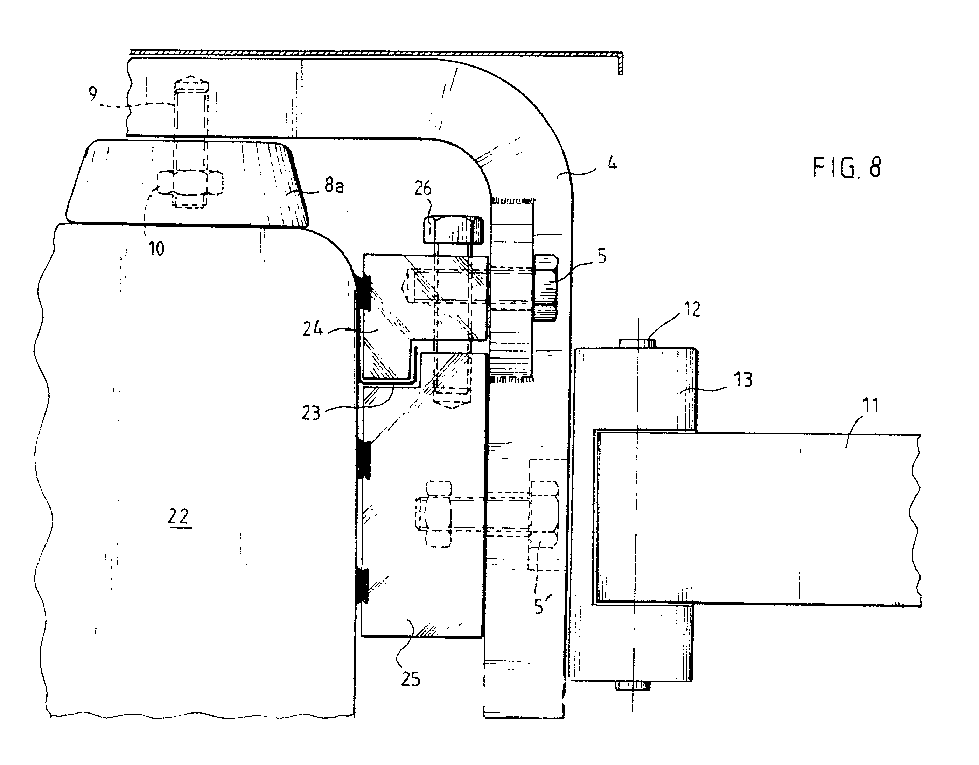

A la Figure 8, on voit un camping-car 22 sur la paroi duquel est fixée une gouttière en tôle 23. Chacune des pattes de support 4 est fixée par des vis 5 et 5' sur deux pièces de fixation 24 et 25 qui enserrent la gouttière 23, les deux pièces 24 et 25 étant pressées l'une contre l'autre par des Vis 26.

Il va de soi que la présente invention ne doit pas être considérée comme limitée au mode de réalisation décrit et représenté. C'est ainsi, par exemple, qu'au lieu de comporter une manivelle de commande, le store pourrait comporter un ressort assurant automatiquement son rappel.

**Revendications**

1. Store pour caravane ou camping-car comprenant un moyen de support (4), deux bras (11) montés pivotants par rapport au moyen de support (4), et un caisson (15) qui est fixé à la partie supérieure de l'élément de support (4) et contient un store enroulable (16) terminé à son extrémité libre par une barre de charge (18), caractérisé en ce que le moyen de support (4) a une section en forme de S dont la branche verticale inférieure est agencée pour pouvoir être fixée sur la gouttière (2) usuellement prévue à la partie supérieure de la caravane ou du camping-car.

2. Store selon la revendication 1, caractérisé en ce que le moyen de support (4) est formé de deux pattes indépendantes.

3. Store selon la revendication 1 ou 2, caractérisé en ce que le moyen du support est assujetti à des pièces de fixation (6) qui comportent un bourrelet en saillie (6a) propre à être enfilé dans la gouttière (2) de la caravane ou du camping-car, et peuvent être immobilisées en position par des vis (7) prenant appui sur la paroi extérieure de cette gouttière (2).

4. Store selon la revendication 1 ou 2, caractérisé en ce que le moyen de support est assujetti à des pièces de fixation (24) et (25) qui enserrent la gouttière (23) de la caravane ou du camping-car et peuvent être serrées l'une contre l'autre par des vis (26).

5. Store selon l'une des revendications 1 à 4, caractérisé en ce que l'extrémité libre de chacun des bras (11) est en forme de crochet ou porte un embout (14) en forme de crochet.

6. Store selon l'une des revendications 1 à 5, caractérisé par des ventouses interposées entre la caravane ou le camping-car et le moyen de support.

**Patentansprüche**

1. Rollvorhang für einen Wohn- oder Camping-Wagen mit einem Aufhängemittel (4), zwei in bezug auf das Aufhängemittel (4) schwenkbaren Armen (11) und einem Kasten (15), der am Oberteil des Aufhängemittels (4) befestigt ist und einen aufrollbaren Vorhang (16) enthält, welcher an seinem freien Ende mit einem Belastungsstab (18) abgeschlossen ist, dadurch gekennzeichnet, daß das Aufhängemittel (4) einen Abschnitt mit S-förmigem Querschnitt aufweist, dessen unterer senkrechter Schenkel so ausgebildet ist, daß er an der gewöhnlich an der Oberseite des Wohn- oder Camping-Wagens vorgesehenen Dachrinne (2) befestigbar ist.

2. Rollvorhang nach Anspruch 1, dadurch gekennzeichnet, daß das Aufhängemittel (4) aus zwei unabhängigen Haken besteht.

3. Rollvorhang nach Anspruch 1 oder 2, dadurch gekennzeichnet, daß das Aufhängemittel (4) an Verankerungsstücken (6) befestigt ist, welche einen hervorragenden Wulst (6a) aufweisen, der in die Dachrinne (2) des Wohn- oder Camping-Wagens einfädelbar ist und die in ihrer Lage durch sich an der Außenwand dieser Dachrinne (2) abstützende Schrauben (7) festlegbar sind.

4. Rollvorhang nach Anspruch 1 oder 2, dadurch gekennzeichnet, daß das Aufhängemittel (4) an Verankerungsstücken (24 und 25) befestigt ist, welche die Dachrinne (23) des Wohn- oder Camping-Wagens umfassen und mittels Schrauben (26) aneinander andrückbar sind.

5. Rollvorhang nach einem der Ansprüche 1 bis 4, dadurch gekennzeichnet, daß das freie Ende jedes der Arme (11) hakenförmig ausgebildet ist oder eine hakenförmige Zwinge (14) trägt.

6. Rollvorhang nach einem der Ansprüche 1 bis 5, gekennzeichnet durch zwischen den Wohn- oder Camping-Wagen und das Aufhängemittel (4) eingeschaltete Saugnäpfe (8a, 8b).

**Claims**

1. Awning for a caravan or camping-car comprising a means of support (4), two arms (11) mounted pivoting in relation to the means of support (4) and a caisson (15) which is fixed to the upper part of the support element (4) and contains an unwindable awning (16) terminated at its free extremity by a load bar (18), characterized in that the means of support (4) has an S-shaped section whose lower vertical intersection leg is disposed so as to be capable of being fixed onto the gutter (2) usually provided on the upper part of the caravan or camping-car.

2. Awning according to claim 1, characterized in that the means of support (4) are formed of two independent brackets.

3. Awning according to claim 1 or 2, characterized in that the means of support are fastened to fixing parts (6) which include a projecting flange suitable for being inserted into the gutter (2) of the caravan or camping-car and which can be locked into position by screws (7) taking support on the outer wall of this gutter (2).

4. Awning according to one of claims 1 to 4, characterized in that the means of support are fastened to fixing parts (24) and (25) which enclose the gutter (23) of the caravan or camping-car and can be tightened against each other by screws (26).

5. Awning according to one of claims 1 to 4, characterized in that the free extremity of each of the arms (11) is in the shape of a hook or carries a hook-shaped joining piece.

6. Awning according to one of claims 1 to 5, characterized by vents inserted between the caravan or camping-car and the means of support.

FIG. 1

FIG. 2

FIG. 6

FIG. 7

## FIG. 3

FIG.4

FIG. 5

0 084 477

FIG. 8